(19) Europäisches Patentamt
European Patent Office
Office européen des brevets

(11) **EP 3 587 374 A1**

(12) **EUROPEAN PATENT APPLICATION**
published in accordance with Art. 153(4) EPC

(43) Date of publication:
**01.01.2020 Bulletin 2020/01**

(21) Application number: **17898116.3**

(22) Date of filing: **21.11.2017**

(51) Int Cl.:
*C04B 22/06* (2006.01)          *B28C 7/04* (2006.01)
*C04B 14/04* (2006.01)          *C04B 14/28* (2006.01)
*C04B 18/14* (2006.01)          *C04B 22/08* (2006.01)
*C04B 22/10* (2006.01)          *C04B 22/14* (2006.01)
*C04B 24/06* (2006.01)          *C04B 28/02* (2006.01)
*C04B 103/10* (2006.01)

(86) International application number:
**PCT/JP2017/041867**

(87) International publication number:
**WO 2018/154890 (30.08.2018 Gazette 2018/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.02.2017 JP 2017030980**

(71) Applicant: **Denka Company Limited
Tokyo 103-8338 (JP)**

(72) Inventors:
• **AIZAWA, Kazuhiro
Itoigawa-city
Niigata 949-0393 (JP)**

• **YOSHIOKA, Maho
Itoigawa-city
Niigata 949-0393 (JP)**
• **MORI, Taiichiro
Itoigawa-city
Niigata 949-0393 (JP)**
• **MORIOKA, Minoru
Itoigawa-city
Niigata 949-0393 (JP)**

(74) Representative: **Ter Meer Steinmeister & Partner
Patentanwälte mbB
Nymphenburger Straße 4
80335 München (DE)**

(54) **HARDENING AGENT FOR READY-MIX SHIPPED RAPID-HARDENING CONCRETE, READY-MIX SHIPPED RAPID-HARDENING CONCRETE MATERIAL, READY-MIX SHIPPED RAPID-HARDENING CONCRETE COMPOSITION, AND METHOD FOR PREPARING SAME**

(57)     A hardening initiator for a ready mixed shipping rapid hardening concrete, containing at least one selected from the group consisting of calcium hydroxide, calcium carbonate, a calcium aluminate based compound, a calcium silicate based compound, a colloidal silica, a portland cement, a calcium sulfo aluminate cement, and a blast furnace slag.

EP 3 587 374 A1

**Description**

Technical Field

The present invention relates to a hardening initiator for a ready mixed shipping rapid hardening concrete, a ready mixed shipping rapid hardening concrete material, a ready mixed shipping rapid hardening concrete composition, and a method for preparing the same.

Background Art

In the worldwide viewpoint, the production volume of cements is being increased, and the infrastructure constructions are being promoted rapidly. In particular, the building spree is still continuing in China and the south-eastern Asia. Among the infrastructure constructions, the road construction holds a prominent position. The road is demanded to be liberated promptly for the service in both new construction and maintenance, and therefore as a material used therefor, a material enabling the service in the early stage is demanded. One of the examples thereof is a rapid hardening concrete.

As the demanded capabilities of the rapid hardening concrete, the usable time is also an important capability. In consideration of the period of time of the production of a ready mixed concrete in ready mixed concrete plant, the delivery to the construction site, and the construction, and the period of time for washing an agitator vehicle for the delivery of the ready mixed concrete, the usable time is desirably at least 120 minutes or more, and 180 minutes or more when possible. However, the securement of the usable time leads to the delay of the hardening time, and thus the demanded strength of an early age material cannot be satisfied. Accordingly, the ordinary techniques are difficult to satisfy the necessary strength exhibition of an early age material while securing the sufficient usable time.

It is the current actual situation that a rapid hardening concrete is prepared in a construction site. For a construction with a small cast amount, a rapid hardening concrete is kneaded with a mixer having a capacity of approximately from 0.1 to 0.2 m$^3$, and the preparation and the casting of the rapid hardening concrete are performed by a labor-intensive manner. In this operation, the large human resources and the large worker hour increase the cost, and the available supply volume of the rapid hardening concrete is limited. Furthermore, in a construction with a large cast amount, a rapid hardening concrete is continuously supplied by using a concrete mobile vehicle. In this operation, however, the concrete mobile vehicle is necessarily arranged, and the worker hour is increased since a fine aggregate and a coarse aggregate with a water content having been managed to a certain value in advance are packed in a flexible bag container and delivered to the construction site, and a rapid hardening cement is packed in a flexible bag container, delivered to the site, and prepared therein, resulting in considerable increase of the cost of the rapid hardening concrete. Moreover, there is a limitation in the arrangement of the concrete mobile vehicle.

The development of a rapid hardening concrete that can be shipped from a ready mixed concrete plant is strongly demanded in these days. The shipment of a rapid hardening concrete from a ready mixed concrete plant enables the supply of a large amount of a rapid hardening concrete to a construction site by utilizing the existing kneading equipments and delivery systems.

For imparting rapid hardening properties to a portland cement, the addition of a calcium aluminate thereto and the combination use of a gypsum compound have been considered since old times by Spackman in the U.S. (see, for example, PTL 1). The utilization of a mixture of an amorphous calcium aluminate and a gypsum compound as a rapid hardener has been known (see, for example, PTLs 2 and 3).

PTLs 4 to 8 describe a rapid setting concrete, in which a rapid hardening cement is shipped from a ready mixed concrete plant, and after reaching a construction site, a rapid setting agent is added thereto.

Furthermore, PTLs 9 to 11 describe a rapid setting concrete, in which a setting retarding agent and calcium hydroxide are added to a ready mixed concrete along with β-naphthalenesulfonic acid in advance, and after reaching a construction site, a rapid setting agent is added thereto.

PTLs 12 and 13 describe a method for producing a rapid hardening concrete, in which a setting retarding agent formed of an oxycarboxylic acid or a salt thereof and lithium carbonate is added to a base concrete in kneading or immediately after kneading, and a rapid hardener containing CaO·Al$_2$O$_3$ as a major component is added to the kneaded base concrete at the time of construction.

Citation List

Patent Literatures

PTL 1: U.S. Patent No. 903,019
PTL 2: JP 48-1024 A
PTL 3: JP 04-97932 A
PTL 4: JP 2000-264712 A
PTL 5: JP 2000-327394 A
PTL 6: JP 2001-213655 A
PTL 7: JP 2001-253753 A
PTL 8: JP 2002-037654 A
PTL 9: JP 11-24074 A
PTL 10: JP 2002-321958 A
PTL 11: JP 2002-321959 A
PTL 12: JP 2007-045654 A
PTL 13: JP 2012-139897 A

Summary of Invention

Technical Problem

However, even though only the rapid hardener techniques of PTLs 1 to 3 are applied, a rapid hardening concrete capable of being shipped as a ready mixed concrete cannot be prepared. Specifically, the ordinary rapid hardening concrete uses a rapid hardener and a retarding agent used in combination, in addition to a portland cement, and in the case where the strength exhibition is demanded for an early age material, the usable time is necessarily set to 60 minutes or less. In this case, the shipment from a ready mixed concrete plant is practically impossible. For achieving the shipment from a ready mixed concrete plant, on the other hand, in the case where the usable time is set to 120 minutes or more by adding a retarding agent in a larger amount, the strength exhibition of an early age material is impossible. Furthermore, in the practical construction, there is a possibility that unexpected accidents including interruptions of the construction due to traffic jams and problems in the construction frequently occur. In the case where a ready mixed shipping rapid hardening concrete is to be considered, it is important to ensure such a long usable time that covers all the aforementioned risks.

Accordingly, the usable time is necessarily at least 120 minutes even in a construction site with a short delivery time, and even more in the case where the traffic volume is large, or the delivery distance is long, the usable time is desirably 180 minutes or more. As described herein, the reason why the ready mixed shipping rapid hardening concrete has not been achieved is that the securement of the long usable time and the strength exhibition in a short period of time are in a trade-off relationship and are considerably difficult to achieve simultaneously.

Even though such a long usable time is set that allows the agitation in a ready mixed concrete plant, the period of time of the delivery to a construction site with an agitator vehicle and the casting thereof, the period of time required for washing, and all the accidents including interruptions of the construction due to traffic jams and problems in the construction, a rapid hardening concrete capable of rapidly exhibiting the strength after casting is strongly demanded. Furthermore, the wear resistance is also an important demanded capability for road pavement.

The techniques of PTLs 4 to 8 are those used for the pre-lining of tunnels, in which the rapid setting agent applied is an alkali aluminate, aluminum sulfate, sodium silicate, or the like, and the working time cannot be secured after the addition of the rapid setting agent. In the guidance of Japan Society of Civil Engineers, as the definition of a rapid setting agent, the quality standard of the rapid setting agent is defined in the spray concrete guide (plan). According to the guide, the start of the setting time is 5 minutes or less, and the end thereof is 15 minutes or less. Therefore, a usable time of 15 minutes or more cannot be secured by using the rapid setting agent.

The techniques of PTLs 9 to 11 also use a rapid setting agent, and thus a usable time of 15 minutes or more cannot be secured after the addition of the rapid setting agent.

The techniques of PTLs 12 and 13 require the addition of a large amount of rapid hardener after reaching a construction site, and thus have poor practical applicability. Specifically, from 10 to 60 parts of a rapid hardener is added to from 40 to 90 parts of a silicate cement. The cement is kneaded in an agitator track after the post-addition of a large amount of the rapid hardener, and therefore the ready mixed concrete can be delivered only in an amount of only 3/8 (37.5% by volume) or less in capacity with respect to the drum capacity of the agitator.

In consideration of the above, an object of the present invention is to provide a ready mixed shipping rapid hardening concrete composition that is excellent in the strength exhibition in the early stage while ensuring a sufficient usable time, and exhibits excellent wear resistance as a hardened product thereof. Furthermore, another object thereof is to provide a hardening initiator for a ready mixed shipping rapid hardening concrete that is capable of favorably exhibiting the effects of the ready mixed shipping rapid hardening concrete composition. Moreover, still another object thereof is to provide a method for preparing a ready mixed shipping rapid hardening concrete composition for producing the ready mixed shipping rapid hardening concrete composition.

Solution to Problem

As a result of the various efforts accumulated by the present inventors for solving the problems, it has been found that a rapid hardening concrete that ensures a sufficient usable time, is excellent in the initial strength exhibition, and is also excellent in the wear resistance can be prepared in such a manner that a concrete prepared with a combination of a particular rapid hardener and a particular retarder is prepared in a ready mixed concrete plant, and after the delivery to a construction site, a particular hardening initiator is added and mixed therein, and thus the present invention has been completed. Accordingly, the present invention is as follows.

[1] A hardening initiator for a ready mixed shipping rapid hardening concrete, containing at least one selected from the group consisting of calcium hydroxide, calcium carbonate, a calcium aluminate based compound, a calcium silicate based compound, a colloidal silica, a portland cement, a calcium sulfo aluminate cement, and a blast furnace slag.

[2] The hardening initiator for a ready mixed shipping rapid hardening concrete according to the item [1], further containing gypsum.

[3] The hardening initiator for a ready mixed shipping rapid hardening concrete according to the item [2], wherein the hardening initiator contains the calcium aluminate based compound and the gypsum.

[4] The hardening initiator for a ready mixed shipping rapid hardening concrete according to any one of the items [1] to [3], wherein the hardening initiator contains the calcium hydroxide and the calcium aluminate based compound, and has a mass ratio of the calcium hydroxide and the calcium aluminate based compound (calcium hydroxide/calcium aluminate based compound) of 1/99 to 99/1.

[5] The hardening initiator for a ready mixed shipping rapid hardening concrete according to any one of the items [1] to [4], wherein the calcium aluminate based compound has a molar ratio of CaO and $Al_2O_3$ ($CaO/Al_2O_3$) of 0.5 to 2.4.

[6] The hardening initiator for a ready mixed shipping rapid hardening concrete according to any one of the items [1] to [5], further containing at least one selected from the group consisting of a dextrin and a cellulose derivative.

[7] The hardening initiator for a ready mixed shipping rapid hardening concrete according to any one of the items [1] to [6], which is packaged in a water soluble film.

[8] A two-component type ready mixed shipping rapid hardening concrete material including a material A containing a cement, a rapid hardener, and a retarder, and a material B containing the hardening initiator for a ready mixed shipping rapid hardening concrete according to any one of the items [1] to [7].

[9] A ready mixed shipping rapid hardening concrete composition including a material A containing a cement, a rapid hardener, and a retarder and a material B containing the hardening initiator for a ready mixed shipping rapid hardening concrete according to any one of claims 1 to 7, which is added and mixed therein.

[10] The ready mixed shipping rapid hardening concrete composition according to the item [9], wherein the rapid hardener contains a calcium aluminate based compound and a gypsum compound as major components.

[11] The ready mixed shipping rapid hardening concrete composition according to the item [9] or [10], wherein the rapid hardener contains a $CaO·Al_2O_3·SiO_2$ based compound and a gypsum compound, and the $CaO·Al_2O_3·SiO_2$ based compound has an amorphous degree of 70% or more and contains $SiO_2$ in a range of 1 to 18% by mass.

[12] The ready mixed shipping rapid hardening concrete composition according to any one of the items [9] to [11], wherein the retarder contains an oxycarboxylic acid, or a carbonate salt of an alkali metal other than lithium and an oxycarboxylic acid.

[13] The ready mixed shipping rapid hardening concrete composition according to any one of the items [9] to [12], wherein the content of the hardening initiator for a ready mixed shipping rapid hardening concrete is from 0.5 to 7 parts by mass per 100 parts by mass in total of the cement and the rapid hardener.

[14] A method for preparing a ready mixed shipping rapid hardening concrete, including in this order: kneading at least a cement, a rapid hardener, and a retarder with kneading water in a kneading vessel; and further mixing the hardening initiator for a ready mixed shipping rapid hardening concrete according to any one of the items [1] to [7] therein.

[15] The method for preparing a ready mixed shipping rapid hardening concrete according to the item [14], wherein in the kneading step, a base concrete containing at least the cement, the rapid hardener, the retarder, an aggregate, and the kneading water has a volume of 40% or more of an inner capacity of the kneading vessel.

[16] The method for preparing a ready mixed shipping rapid hardening concrete according to the item [14] or [15], wherein a kind and a mixed amount of the hardening initiator for a ready mixed shipping rapid hardening concrete are determined to ensure a usable time of 15 minutes or more after mixing the hardening initiator for a ready mixed shipping rapid hardening concrete.

[17] The method for preparing a ready mixed shipping rapid hardening concrete according to any one of the items [14] to [16], wherein the retarder is used in an amount of 0.3 to 5 parts by mass per 100 parts by mass in total of the cement and the rapid hardener.

Advantageous Effects of Invention

According to the present invention, a ready mixed shipping rapid hardening concrete composition that is excellent in the strength exhibition in the early stage while ensuring a sufficient usable time, and exhibits excellent wear resistance as a hardened product thereof can be provided. Furthermore, a hardening initiator for a ready mixed shipping rapid hardening concrete that is capable of favorably exhibiting the effects of the ready mixed shipping rapid hardening concrete composition can be provided. Moreover, a method for preparing a ready mixed shipping rapid hardening concrete composition for producing the ready mixed shipping rapid hardening concrete composition can be provided.

In consideration of the aforementioned effects, the present invention can be applied particularly favorably to the civil engineering and construction fields.

Description of Embodiments

Embodiments of the present invention will be described in detail below, but the present invention is not limited to the embodiments. In the description herein, the "part" and "percentage" are based on mass unless otherwise defined. In the description herein, the composition collectively means a cement composition, a mortar composition, and a concrete composition.

[1] Hardening initiator for Ready Mixed Shipping Rapid Hardening Concrete

In an embodiment relating to the hardening initiator for a ready mixed shipping rapid hardening concrete of the present invention, the hardening initiator for a ready mixed shipping rapid hardening concrete (which may be hereinafter referred simply to as a "hardening initiator") means such a material that again invokes, for example, in a construction site, the hydration hardening of a rapid hardening concrete having been retarded with a large amount of the retarder described later (i.e., a concrete where the hydration hardening thereof is substantially stopped therewith). Specific examples thereof include calcium hydroxide, calcium carbonate, a calcium aluminate based compound, a calcium silicate based compound, a colloidal silica, a portland cement, a calcium sulfo aluminate cement, and a blast furnace slag, one kind or a combination of two or more kinds of which may be used.

The "ready mixed shipping rapid hardening concrete" referred in the present embodiment means such a concrete that is kneaded as a ready mixed concrete in a ready mixed concrete factory, a ready mixed concrete plant, or the like, delivered with an agitator vehicle, shipped to a construction site, such as a civil engineering site or a building site, and hardened relatively rapidly after casting. The ready mixed shipping rapid hardening concrete necessarily has a usable time from the shipment to the completion of the work of at least 120 minutes or more in relation to the delivery time, and desirably has a usable time of 180 minutes or more ensured in the case where the delivery distance is long. The present embodiment may be specialized to the application.

The "agitator vehicle" herein means such a cargo vehicle that is equipped with a mixing drum (i.e., a vessel for kneading) on the deck thereof, and is capable of delivering a ready mixed concrete under agitation, and includes vehicles having a maximum load of 2 to 26 ton while there is no large difference among them, which may be selected depending on the application.

It is necessary to ensure the working time after the addition of the hardening initiator for a ready mixed shipping rapid hardening concrete, and therefore the kind of the hardening initiator and the amount thereof added are necessarily selected to ensure a usable time of at least 15 minutes. From this standpoint, such rapid setting agents as sodium aluminate, aluminum sulfate, sodium silicate are necessarily prevented from being selected as the hardening initiator. These rapid setting agents exhibit the rapid setting phenomenon immediately after the addition thereof, and a usable time of 10 minutes or more is difficult to ensure. Accordingly, the amount of these rapid setting agent is preferably 30 parts or less per 100 parts of the hardening initiator for a ready mixed shipping rapid hardening concrete, and it is more preferred that these rapid setting agent are not used.

The hardening initiator for a ready mixed shipping rapid hardening concrete contains any of the aforementioned materials as the essential component, and preferably contains calcium hydroxide and a calcium aluminate based compound in combination, for improving the temperature dependency. The mixing ratio thereof is not particularly limited, and the mass ratio of the calcium hydroxide and the calcium aluminate based compound (calcium hydroxide/calcium aluminate based compound) is preferably from 1/99 to 99/1, and more preferably from 2/98 to 98/2. In the case where the mass ratio is from 1/99 to 99/1, the temperature dependency can be decreased, and in addition the hardening initiator can stably exhibit the effect thereof even in the case where the kind of the cement is changed. The mass ratio is further preferably from 10/90 to 90/10, and still further preferably from 20/80 to 80/20.

The hardening initiator for a ready mixed shipping rapid hardening concrete may have, for example, a 300 $\mu$m sieve residue of 5% or less, and preferably has a 100 $\mu$m sieve residue of 10% or less.

In the present invention, while a calcium aluminate based compound is used in the rapid hardener described later, the calcium aluminate based compound that is applied to the hardening initiator preferably has a CaO/Al$_2$O$_3$ molar ratio in a range of 0.5 to 2.4. In the case where the CaO/Al$_2$O$_3$ molar ratio is 0.5 or more, the effect of improving the temperature dependency can be further sufficiently exhibited, and in the case where the molar ratio is 2.4 or less, the rapid hardening phenomenon can be suppressed when the hardening initiator is used as a slurry.

Within the aforementioned preferred range, a range of 0.5 to 1.2 is more preferred, and a range of 0.75 to 1.0 is further preferred, from the standpoint of the prolongation of the usable time. From the standpoint of the strength exhibition in the early stage, a range of 1.2 to 2.4 is more preferred, and a range of 1.25 to 2.3 is further preferred.

The calcium aluminate based compound can be roughly classified into an amorphous calcium aluminate based compound and a crystalline calcium aluminate based compound, and an amorphous calcium aluminate based compound is preferably used from the standpoint of the long-term strength exhibition.

In the hardening initiator for a ready mixed shipping rapid hardening concrete, the amount of each of the calcium hydroxide, the calcium carbonate, the calcium aluminate based compound, the calcium silicate based compound, the colloidal silica, the portland cement, the calcium sulfo aluminate cement, and the blast furnace slag, or the total amount thereof in the case of combination use thereof is preferably 70% or more, and more preferably 80% or more, from the standpoint of the efficient exhibition of the effect thereof or the combined effect thereof.

The presence of a substance other than the hardening initiators exemplified above (i.e., an additional component) may enhance the dispersibility of the hardening initiator or may facilitate the effect of the hardening initiator, and therefore the additional component that does not impair the effects of the present invention may be contained in a range of 30% or less.

The hardening initiator of the present invention preferably contains gypsum in addition to any of the aforementioned components, and more preferably contains a calcium aluminate based compound and gypsum. The gypsum used may be any of anhydrous gypsum, hemihydrate gypsum, and dihydrate gypsum. Natural gypsum, chemical gypsum, such as phosphoric acid by-product gypsum, stack gas desulfurized gypsum, and hydrofluoric acid by-product gypsum, and gypsum obtained through heat treatment of these kinds of gypsum may also be used. Among these, anhydrous gypsum and/or hemihydrate gypsum are preferred from the standpoint of the strength exhibition, anhydrous gypsum is preferably selected from the standpoint of the cost, and type II anhydrous gypsum and/or natural anhydrous gypsum are preferred. The granularity in terms of Blaine value of the gypsum is preferably 3,000 cm$^2$/g or more, and more preferably from 4,000 to 7,000 cm$^2$/g. In the case where the granularity is 3,000 cm$^2$/g or more, the initial strength exhibition can be favorably achieved.

The amount of the gypsum used is preferably from 10 to 200 parts, more preferably from 15 to 150 parts, and further preferably from 90 to 130 parts, per 100 parts of the hardening initiator (preferably a calcium aluminate based compound). With the range, the long-term strength exhibition and the durability can be improved.

The amount of the hardening initiator for a ready mixed shipping rapid hardening concrete used is not particularly limited, and is preferably from 0.5 to 7 parts, and more preferably from 1 to 5 parts, per 100 parts in total of the cement and the rapid hardener, which are described later. In the case where the amount is from 0.5 to 7 parts, the strength exhibition of an early age material can be sufficient, and the usable time can be ensured. The hardening initiator may be formed into a slurry, which may be then added to various base concretes. In this case, it is desirable from the standpoint of the strength exhibition that a part of the kneading water of the concrete mix is used for the slurry of the hardening initiator, and the corresponding amount of water is deducted from the base concrete. The hardening initiator may be added to various base concretes in the state that the hardening initiator is packaged with a water soluble film, such as a polyvinyl alcohol (PVA) film. In this case, various additives may be mixed along with the hardening initiator, in such a range that does not impair the effect of the hardening initiator. In the description herein, the base concrete means a concrete obtained by kneading at least a cement, a rapid hardener, a retarder, an aggregate, and kneading water.

The water soluble film used in a preferred embodiment may be formed of wood pulp, polysaccharide, Poval, cellulose, polyvinyl alcohol, carboxymethyl cellulose, starch, or the like as a raw material, and the content of wood pulp in the raw material is preferably from 75 to 95%, and more preferably from 80 to 90%. The amount of the raw material including polysaccharide, Poval, cellulose, polyvinyl alcohol, carboxymethyl cellulose, starch, and the like except for the wood pulp is preferably from 5 to 25%, and more preferably from 10 to 20%.

The amount of the polysaccharide, Poval, cellulose, polyvinyl alcohol, carboxymethyl cellulose, starch, and the like that is smaller than the range is not preferred since an adhesive raw material necessary for heat-seal in the production of the water soluble film may be short and the production thereof becomes difficult, and the amount thereof that exceeds the range is not preferred since air may be entrained in the concrete.

The water soluble film used in a preferred embodiment is not particularly limited, as far as it is water soluble, and the dispersion time when 10 g of the water soluble film is added to 500 mL of water at 20°C placed in a beaker (capacity: 1,000 mL) and stirred with a stirrer (produced by Ikeda Riko Co., Ltd.) at 800 rpm is preferably 30 seconds or less, and more preferably 20 seconds or less. The dispersion time means the time of the state where no agglomerate is visually found. A water soluble film having a dispersion time exceeding 30 seconds may not completely dispersed after kneading the concrete and may remain in the concrete in some cases.

The kneading time for the concrete using the hardening initiator in the embodiment that the hardening initiator is packaged with the water soluble film of the preferred embodiment may be equivalent to the concrete without addition that does not use the embodiment, and in the case where a water soluble film that is not the water soluble film of the preferred embodiment is used, the kneading time of the concrete may be prolonged, and with the same kneading time, the water soluble film may remain in the concrete in some cases even though the number of packages added is the same.

In the case where the hardening initiator of the present invention is formed into a slurry, which is then added to various base concretes through pressure feeding, the hardening initiator preferably contains at least one selected from the group consisting of a dextrin and a cellulose derivative. Among these, a dextrin, or a combination of a dextrin and a cellulose derivative is preferred.

The dextrin retards the setting of cement and thereby can enhance the stability of the ready mixed shipping rapid hardening concrete composition described later. The dextrin is also referred to as chemically-modified starch, and in general, can be obtained though hydrolysis of maize starch, potatoes, tapioca starch, wheat starch, sweet potato starch, rice starch, or the like. Among these, an acid roasted dextrin obtained through decomposition by adding a diluted acid is the most common, and one obtained through an acid immersion method, a maltodextrin obtained through enzymatic decomposition of starch, British gum obtained without roasting, pregelatinized starch obtained through rapid dehydration drying of pregelatinized starch obtained by heating starch having water added thereto or by adding an alkali or a concentrated solution of a salt thereto, and powder obtained by dissolving these materials in water and then drying the residue can be used. In addition, those subjected to chemical modification such as esterification for providing carboxylic acid ester, esterification for providing carbonic ester, and etherification may be used. In particular, a dextrin having a cold water soluble fraction at 20°C of 5 to 90% is preferred, and more preferably from 10 to 65%. In the case where the cold water soluble fraction at 20°C of the dextrin is small, there may be a case where the sufficient setting retardation effect cannot be obtained, and in the case where the cold water soluble fraction at 20°C of the dextrin is large, there may be a case where hardening failure occurs.

The amount of the dextrin is preferably from 0.01 to 5 parts, and more preferably from 0.1 to 3 parts, per 100 parts of the hardening initiator. In the case where the amount thereof is from 0.01 to 5 parts, the strength exhibition of an early age material can be sufficient, and the heat generation in the formation of the slurry of the hardening initiator can be suppressed.

The cellulose derivative contributes to the prevention of bleeding in the formation of the slurry of the hardening initiator, and while not particularly limited, examples thereof include methyl cellulose (MC) and carboxymethyl cellulose (CMC), which are generally referred to as a water soluble polymer.

The amount of the cellulose derivative used is preferably from 5 to 80 parts, and more preferably from 10 to 50 parts, per 100 parts of the dextrin. In the case where the amount is from 5 to 80 parts, both the prevention of bleeding and the long-distance pressure feedability can be achieved simultaneously.

[2] Ready Mixed Shipping Rapid Hardening Concrete Material and Ready Mixed Shipping Rapid Hardening Concrete Composition

An embodiment of the ready mixed shipping rapid hardening concrete material of the present invention is a two-component type ready mixed shipping rapid hardening concrete material including a material A containing a cement, a rapid hardener and a retarder, and a material B containing the hardening initiator for a ready mixed shipping rapid hardening concrete described above.

An embodiment of the ready mixed shipping rapid hardening concrete composition of the present invention includes the material A and the material B which is added and mixed in the material A.

In the present embodiment, it is necessary to prepare various base concretes containing a rapid hardener and a retarder added and mixed therein in advance, and it is necessary to add and mix the hardening initiator to the various base concretes after the delivery to a construction site. The usable time cannot be ensured if the hardening initiator is mixed in the various base concretes in the ready mixed concrete plant but not in the construction site. Furthermore, if both the rapid hardener and the hardening initiator are added in the ready mixed concrete factory, the usable time becomes extremely short, and the concrete is unavoidably discarded during the delivery.

In the case where the hardening initiator is added in the ready mixed concrete factory, and the rapid hardener is added in the construction site, the usable time after the addition of the rapid hardener becomes as extremely short as 10 minutes or less, disabling the construction. In the case where the rapid hardener and the hardening initiator are added in the construction site, the usable time is shortened, the compression strength becomes a low value, the wear resistance tends to be deteriorated, and furthermore only approximately 30% of the drum capacity of the agitator can be delivered. As described above, the addition timing of the rapid hardener and the hardening initiator is significantly important.

In the present embodiment, accordingly, the two-component system including material A containing a cement, a rapid hardener, and a retarder, and the material B containing the hardening initiator for a ready mixed shipping rapid hardening concrete is used, specifically, the material A and the material B are separately delivered from the ready mixed concrete plant to the construction site, and then the components are mixed in the construction site, so as to provide the ready mixed shipping rapid hardening concrete composition of the present embodiment. The components relating to the present embodiment will be described in detail below.

(Cement)

The "cement" in the present embodiment is not particularly limited, and examples thereof include any type of cement, such as normal, early strength, moderate heat, and low heat portland cements defined in the Japanese Industrial Standard (JIS), various mixed cements obtained by mixing a blast furnace slag, a fly ash, or silica, a filler cement obtained by mixing with limestone powder, an air-cooled blast furnace slag fine powder, or the like, and an environment-conscious cement (eco-cement) produced from urban waste incineration ash or sewage sludge incineration ash. Examples thereof further include a cement defined by the overseas standard EN197-2000 and any type of cement defined by the Chinese GB Standard, and one kind or two or more kinds of these cements can be used.

The constitutional compounds of a portland cement include alite ($3CaO \cdot SiO_2$), belite ($2CaO \cdot SiO_2$), aluminate ($3CaO \cdot Al_2O_3$), and ferrite ($4CaO \cdot Al_2O_3 \cdot Fe_2O_3$), and also include dihydrate gypsum (a part of which may be changed to hemihydrate gypsum in some cases) mixed therein. In the present embodiment, a cement that does not contain an admixture, such as a blast furnace slag, fly ash, silica, and limestone fine powder, is preferably selected from the standpoint of the strength exhibition, and among these, a cement having a large alite content and a high degree of fineness (i.e., a small particle size) is preferably selected. Examples of cements corresponding thereto include an early strength cement and a normal cement for the cements of Japan, and include PII52.5 and PII42.5 for the cements of China.

(Rapid Hardener)

The rapid hardener of the present embodiment contains a calcium aluminate based compound and a gypsum compound. The calcium aluminate based compound herein collectively means compound formed mainly of CaO and $Al_2O_3$, which are not particularly limited. Specific examples thereof include $CaO \cdot Al_2O_3$, $12CaO \cdot 7Al_2O_3$, $11CaO \cdot 7AlO_3 \cdot CaF_2$, $3CaO \cdot Al_2O_3$, $3CaO \cdot 3AbO_3 \cdot CaSO_4$, and an amorphous substance formed mainly of CaO and $Al_2O_3$ (such as $CaO \cdot Al_2O_3 \cdot SiO_2$ based compound). Among these, the amorphous substance is preferably selected from the standpoint of the strength exhibition.

The amorphous degree in the present embodiment is defined as follows. The target substance is annealed at 1,000°C for 2 hours, and then gradually cooled at a cooling rate of 5°C per minute for crystallization. The crystallized substance is measured by the powder X-ray diffractometry, and the area $S_0$ of the main peak of the crystallized mineral is obtained. Subsequently, the amorphous degree X is obtained from the main peak area S of the crystal of the substance before annealing, according to the following expression.

$$X\ (\%) = 100 \times (1 - S/S_0)$$

While the ordinary industrial materials contain impurities, such as $SiO_2$, $MgO$, $Fe_2O_3$, $TiO_2$, $K_2O$, and $Na_2O$, the impurities have an aspect of promoting the amorphization of the calcium aluminate based compound, and may be present with no problem, as far as the total amount thereof is 20% or less. Among these, $SiO_2$ is preferably present, and may be contained in a range of 1 to 18% for providing amorphous calcium aluminate.

Accordingly, it is preferred that the rapid hardener contains a $CaO \cdot Al_2O_3 \cdot SiO_2$ based compound and a gypsum compound, and the $CaO \cdot Al_2O_3 \cdot SiO_2$ based compound has an amorphous degree of 70% or more and contains $SiO_2$ in a range of 1 to 18% by mass. It is more preferred that the $CaO \cdot Al_2O_3 \cdot SiO_2$ based compound has an amorphous degree of 80% or more and contains $SiO_2$ in a range of 2 to 13% by mass.

The calcium aluminate based compound is preferably controlled to have a Blaine specific surface area of 3,000 to 9,000 $cm^2/g$, and more preferably from 4,000 to 8,000 $cm^2/g$, through a pulverization treatment. In the case where the degree of fineness (i.e., the Blaine specific surface area) of the calcium aluminate based compound is from 3,000 to 9,000 $cm^2/g$, the sufficient rapid hardening properties can be readily obtained, and the strength exhibition at a low temperature can be readily obtained.

The rapid hardener of the present embodiment is preferably controlled to have a Blaine specific surface area of 3,000 to 9,000 cm$^2$/g, and more preferably from 4,000 to 8,000 cm$^2$/g, through a pulverization treatment. In the case where the degree of fineness (i.e., the Blaine specific surface area) of the rapid hardener is from 3,000 to 9,000 cm$^2$/g, the sufficient ultrarapid hardening properties can be readily obtained, and the strength exhibition at a low temperature can be readily obtained.

The amount of the rapid hardener used is preferably from 10 to 35 parts, more preferably from 15 to 30 parts, and further preferably from 20 to 25 parts, per 100 parts in total of the cement and the rapid hardener. In the case where the amount thereof is from 10 to 35 parts, the good initial strength exhibition can be readily obtained, and the decrease of the long-term strength can be readily prevented from occurring.

(Retarder)

The retarder used in the present embodiment has a function of retarding the rapid hardening concrete shipped as a ready mixed concrete (i.e., substantially terminating the hydration hardening), and avoids accidental rapid hardening in the ready mixed concrete plant and accidental rapid hardening in the delivery with an agitator vehicle. Examples of the retarder include an oxycarboxylic acid or a salt thereof, a combination use thereof with a carbonate salt of an alkali metal, a sugar, and boric acid. The combination use of an oxycarboxylic acid and a carbonate salt of an alkali metal is preferred due to the large effect of retarding the rapid hardening concrete and the good strength exhibition after the addition of the hardening initiator. The carbonate salt of an alkali metal is preferably a carbonate salt of an alkali metal other than lithium. It is necessary that a sufficient usable time is ensured for the base concrete, a certain usable time is ensured even after the addition of the hardening initiator, and good strength exhibition is ensured, and in these standpoints, the use of lithium carbonate is not preferred.

The retarder preferably contains an oxycarboxylic acid, or a mixture of a carbonate salt of an alkali metal other than lithium and an oxycarboxylic acid, and more preferably contains a carbonate salt of an alkali metal other than lithium and an oxycarboxylic acid. The mixing ratio of the carbonate salt of an alkali metal other than lithium and the oxycarboxylic acid in terms of (carbonate salt of alkali metal)/(oxycarboxylic acid) is preferably from 10/90 to 90/10, and more preferably from 20/80 to 80/20.

Examples of the oxycarboxylic acid or a salt thereof include citric acid, gluconic acid, tartaric acid, and malic acid, and examples of the salt thereof include a sodium salt, a potassium salt, a calcium salt, and a magnesium salt. These may be used alone or as a combination of two or more kinds thereof.

The amount of the retarder used is preferably from 0.3 to 5 parts, and more preferably from 0.3 to 4.5 parts, per 100 parts in total of the cement and the rapid hardener. In the case where the amount is from 0.3 to 5 parts, a sufficient working time can be readily ensured in addition to the delivery time to the construction site. Furthermore, the hydration hardening can be readily again invoked by the addition of the hardening initiator.

(Gypsum)

The gypsum compound used in the present embodiment may be any of anhydrous gypsum, hemihydrated gypsum, and dihydrated gypsum. Furthermore, natural gypsum, chemical gypsum, such as phosphoric acid by-product gypsum, stack gas desulfurized gypsum, and hydrofluoric acid by-product gypsum, and gypsum obtained through heat treatment of these kinds of gypsum may also be used. Among these, anhydrous gypsum and/or hemihydrate gypsum are preferred from the standpoint of the strength exhibition, anhydrous gypsum is preferably selected from the standpoint of the cost, and type II anhydrous gypsum and/or natural anhydrous gypsum are preferred. The granularity in terms of Blaine value of the gypsum is preferably 3,000 cm$^2$/g or more, and more preferably from 4,000 to 7,000 cm$^2$/g. In the case where the granularity is 3,000 cm$^2$/g or more, the initial strength exhibition can be favorably achieved.

The amount of the gypsum compound used is preferably from 10 to 200 parts, more preferably from 15 to 150 parts, and further preferably from 20 to 130 parts, per 100 parts of the calcium aluminate based compound. With the range, the strength exhibition can be favorably achieved.

In the present embodiment, in addition to the rapid hardener, the retarder, and the hardening initiator described above, one kind or two or more kinds of an expanding agent, a water reducing agent, an AE water reducing agent, a high-performance water reducing agent, a slag, such as air-cooled blast furnace slag fine powder and air-cooled blast furnace slag fine powder, limestone fine powder, a fly ash, an admixture, such as silica fume, a defoaming agent, a thickening agent, a rust inhibiting agent, an antifreezing agent, a contraction reducing agent, a polymer, a clay mineral, such as bentonite, and an anion exchanger, such as hydrotalcite, may be used in such a range that does not impair the object of the present invention.

[3] Method for preparing Ready Mixed Shipping Rapid Hardening Concrete

An embodiment of the method for preparing a ready mixed shipping rapid hardening concrete of the present invention includes in this order: kneading at least a cement, a rapid hardener, and a retarder with kneading water in a kneading vessel; and further mixing the hardening initiator for a ready mixed shipping rapid hardening concrete, for example, in a construction site.

The kneading water may be shipped from a ready mixed concrete factory, a ready mixed concrete plant, or the like. In the kneading step, the delivery may be often performed simultaneously with the kneading.

In the step of kneading (and delivery) after the shipment from a ready mixed concrete factory, a ready mixed concrete plant, or the like, a base concrete containing at least the cement, the rapid hardener, the retarder, and the kneading water preferably has a volume of 40% (% by volume) or more, and more preferably 50% by volume of more, of the inner capacity of the kneading (and delivery) vessel.

The kneading (and delivery) vessel herein may be, for example, a vessel capable of retaining a ready mixed concrete under agitation mounted on a vehicle for delivering a ready mixed concrete, such as a drum of an agitator vehicle.

The kind and the mixed amount of the hardening initiator for a ready mixed shipping rapid hardening concrete are preferably determined to ensure a usable time of 10 minutes or more, and preferably 15 minutes or more, after mixing the hardening initiator for a ready mixed shipping rapid hardening concrete.

As described above, the hardening initiator for a ready mixed shipping rapid hardening concrete of the present embodiment is preferably used as an admixture that is added to a ready mixed concrete after the casting operation, which has been kneaded and then shipped to a construction site. Similarly, the ready mixed shipping rapid hardening concrete material of the embodiment is preferably used as an admixture that is added thereto after the casting operation as similar to the hardening initiator. With the use thereof, the usable time can be, for example, 120 minutes or more, and preferably 180 minutes or more.

Examples

The present invention will be described in more detail with reference to experimental examples below, but the present invention is not limited thereto.

(Experimental Example 1)

A rapid hardening concrete was prepared with 380 kg/m$^3$ of a cement, 120 kg/m$^3$ of a rapid hardener A, a water/binder ratio of 32%, s/a of 42%, and an air amount of $2.0 \pm 1.5\%$ by volume. At this time, 1.5 parts of a retarder 1 was added per 100 parts of the binder formed of the cement and the rapid hardener, so as to prevent the hydration hardening from occurring for 24 hours or more (material A). Assuming the delivery time to the construction site and the occurrence of the waiting time after reaching the construction site, after 120 minutes, 3 parts of various types of a hardening initiator (material B) shown in Table 1 below was added per 100 parts of the binder. The usable time after the addition of the hardening initiator was measured, and the compression strength after 6 hours from the addition of the hardening initiator (i.e., after 8 hours from the completion of kneading) was measured. The wear resistance was also evaluated. The results are shown in Table 1.

The s/a is the fine aggregate ratio, which is the value in terms of percentage of the absolute volume ratio of the amount of the fine aggregate with respect to the total aggregate amount in the concrete.

<Material Used>

(1) Hardening Initiators a to h

Hardening initiator a: calcium hydroxide, commercially available product, 300 $\mu$m sieve residue: less than 1%, 100 $\mu$m sieve residue: 5%

Hardening initiator b: calcium carbonate, commercially available product, Blaine specific surface area: 4,000 cm$^2$/g

Hardening initiator c: a calcium aluminate based compound, an alumina cement No. 1 formed mainly of $CaO \cdot Al_2O_3$, molar ratio of CaO and $Al_2O_3$ ($CaO/Al_2O_3$): 1.27, Blaine specific surface area: 5,000 cm$^2$/g

Hardening initiator d: a calcium silicate compound, $3CaO \cdot SiO_2$ synthesized from extra pure reagent calcium carbonate and $SiO_2$, Blaine specific surface area: 3,000 cm$^2$/g

Hardening initiator e: a colloidal silica, commercially available product

Hardening initiator f: a portland cement, commercially available product

Hardening initiator g: a calcium sulfo aluminate cement, commercially available product, Blaine specific surface area: 4,500 cm$^2$/g

Hardening initiator h: a blast furnace slag, commercially available product

(2) Rapid Setting Agents 1 to 3

Rapid setting agent 1: sodium aluminate, extra pure reagent
Rapid setting agent 2: aluminum sulfate, extra pure reagent
Rapid setting agent 3: sodium silicate, extra pure reagent

(3) Rapid Hardener

Rapid hardener A: a mixture of the same amounts of a $CaO \cdot Al_2O_3 \cdot SiO_2$ based amorphous substance and anhydrous gypsum, the $CaO \cdot Al_2O_3 \cdot SiO_2$ based amorphous substance having 43% of CaO, 44% of $Al_2O_3$, 10% of $SiO_2$, 3% of others, density: 2.85 $g/cm^3$, Blaine specific surface area: 5,000 $cm^2/g$, amorphous degree: 90%

(4) Retarder

Retarder 1: a mixture of 75 parts of extra pure reagent potassium carbonate and 25 parts of extra pure reagent citric acid

(5) Others

Cement: a commercially available normal portland cement (produced by Denka Co., Ltd., density: 3.15 $g/cm^3$)
Anhydrous gypsum: type II anhydrous gypsum, pH 3.0, Blaine specific surface area: 5,000 $cm^2/g$
Water: tap water
Fine aggregate: natural river sand
Coarse aggregate: crushed stone

<Measurement Methods>

Usable time: The start time of setting was measured according to JIS A1147, and designated as the usable time.
Compression strength: The compression strength was measured according to JIS A1108.
Wear resistance test: The wear resistance was evaluated by the O-type abrasion test. The test pieces were assembled in a hexagonal shape on a drum with the test surfaces thereof directed inward, and 20 pieces of rods of 22 mm in diameter $\times$ 40 mm (approximately 2.5 kg) obtained by cutting a PC steel bar were placed therein and rotated at 80 rpm. The normal rotation and the reverse rotation were repeated every one hour, and after 4 hours, the test pieces were taken out and calculated for the abrasion coefficient. The abrasion coefficient was calculated by the following expression.

$$(\text{abrasion coefficient } (\text{mm}^3/\text{cm}^2)) = ((\text{abrasion mass})/(\text{density of specimen}))/(\text{abrasion area})$$

The abrasion area herein was 27 $\times$ 14.5 cm = 391.5 $cm^2$.
An abrasion coefficient of less than 300 was evaluated as A, that of 300 or more and less than 400 was evaluated as B, and that of 400 or more was evaluated as C.

Table 1

| Experiment No. | Kind and amount of hardening initiator or rapid setting agent | Environmental temperature (°C) | Usable time (min) | Compression strength (N/mm$^2$) | | Wear resistance | Note |
|---|---|---|---|---|---|---|---|
| | | | | 6 hours | 1 day | | |
| 1-1 | hardening initiator a 3 | 20 | 76 | 27.6 | 44.6 | A | example |
| 1-2 | hardening initiator b 3 | 20 | 83 | 24.0 | 52.5 | A | example |
| 1-3 | hardening initiator c 3 | 20 | 77 | 24.7 | 43.4 | A | example |
| 1-4 | hardening initiator d 3 | 20 | 91 | 25.9 | 53.9 | A | example |
| 1-5 | hardening initiator e 3 | 20 | 82 | 26.1 | 47.7 | A | example |
| 1-6 | hardening initiator f 3 | 20 | 77 | 28.5 | 50.9 | A | example |
| 1-7 | hardening iniator g 3 | 20 | 82 | 26.3 | 47.6 | A | example |
| 1-8 | hardening initiator h 3 | 20 | 85 | 25.3 | 51.4 | A | example |
| 1-9 | rapid setting agent 1 3 | 20 | * | * | * | * | comparative example |
| 1-10 | rapid setting agent 2 3 | 20 | * | * | * | * | comparative example |
| 1-11 | rapid setting agent 3 3 | 20 | * | * | * | * | comparative example |
| 1-12 | 0 | 20 | ≥ 24 hours | unmeasurable not hardened | unmeasurable not hardened | C | comparative example |
| 1-13 | hardening initiator a 0.5 | 20 | 105 | 24.2 | 44.4 | A | example |
| 1-14 | hardening initiator a 2 | 20 | 85 | 26.9 | 45.5 | A | example |
| 1-15 | hardening initiator a 7 | 20 | 65 | 30.0 | 46.9 | A | example |
| 1-16 | hardening initiator a 3 | 5 | 130 | 20.8 | 38.7 | A | example |
| 1-17 | hardening initiator a 0.3 hardening initiator c 2.7 | 5 | 94 | 24.5 | 40.7 | A | example |
| 1-18 | hardening initiator a hardening initiator c 0.3 | 5 | 115 | 22.8 | 39.6 | A | example |
| * unmeasurable due to immediate setting to make casting in mold form impossible | | | | | | | |

It is understood from Table 1 that in the case where the hardening initiator is not added, the concrete is not hardened over 24 hours or more, and a 6-hour strength and a 1-day strength are not exhibited, but in the case where the hardening initiator is added, a good 6-hour strength and a good 1-day strength are exhibited after ensuring a certain usable time. In addition, excellent wear resistance is obtained. It is understood that in the case where sodium aluminate, aluminum sulfate, or sodium silicate as a rapid setting agent is used, the concrete is immediately set to fail to ensure a usable time. It is understood that the temperature dependency can be decreased by using calcium hydroxide and the calcium aluminate based compound in combination.

(Experimental Example 2)

The same procedures as in Experimental Example 1 were performed except that 3 parts of the hardening initiator a was used per 100 parts of the binder, and the kind and the amount of the rapid hardener were changed as shown in Table 2 (rapid hardeners A to D: the rapid hardener A was the same as used in Experimental Example 1, and the rapid hardeners B to D were as described below). The results are shown in Table 2.

<Materials Used>

Rapid hardener B: a mixture of the same amounts of $CaO \cdot Al_2O_3 \cdot SiO_2$ based amorphous substance and anhydrous gypsum, the $CaO \cdot Al_2O_3 \cdot SiO_2$ based amorphous substance having 47% of CaO, 47% of $Al_2O_3$, 3% of $SiO_2$, 3% of others, density: 2.85 $g/cm^3$, Blaine specific surface area: 5,000 $cm^2/g$, amorphous degree: 90%
Rapid hardener C: a mixture of the same amounts of an alumina cement No. 1 formed mainly of $CaO \cdot Al_2O_3$ and anhydrous gypsum, density: 3.00 $g/cm^3$, Blaine specific surface area: 5,000 $cm^2/g$
Rapid hardener D: an ultrarapid hardening cement containing a $3CaO \cdot 3AbO_3 \cdot CaSO_4$ based compound as a major component (40%), density: 2.80 $g/cm^3$, Blaine specific surface area: 5,000 $cm^2/g$

Table 2

| Experiment No. | Kind and amount of rapid hardener | Usable time (min) | Compression strength (N/mm$^2$) | | Wear resistance | Note |
|---|---|---|---|---|---|---|
| | | | 6 hours | 1 day | | |
| 1-1 | A 120 | 76 | 27.6 | 44.6 | A | example |
| 2-1 | B 120 | 65 | 26.6 | 45.3 | A | example |
| 2-2 | C 120 | 60 | 17.9 | 35.6 | B | example |
| 2-3 | D 500 | 80 | 15.8 | 33.3 | B | example |
| 2-4 | 0 | ≥ 24 hours | unmeasurable not hardened | unmeasurable not hardened | C | comparative example |
| 2-5 | A 60 | 110 | 22.2 | 44.5 | B | example |
| 2-6 | A 90 | 95 | 25.7 | 45.3 | A | example |
| 2-7 | A 140 | 62 | 33.8 | 43.1 | A | example |
| 2-8 | A 160 | 53 | 33.1 | 41.2 | A | example |

It is understood from Table 2 that in the case where the rapid hardener is not added, the concrete is not hardened over 24 hours or more, and a 6-hour strength and a 1-day strength are not exhibited, but in the case where the rapid hardener is added, a good 6-hour strength and a good 1-day strength are exhibited after ensuring a certain usable time. In addition, excellent wear resistance is obtained. It is understood that the effect of the hardening initiator is exhibited even though the kind of the rapid hardener is changed.

(Experimental Example 3)

The same procedures as in Experimental Example 1 were performed except that the hardening initiator a was used, and the kind and the amount of the retarder were changed as shown in Table 3. The results are shown in Table 3.

<Materials Used>

Retarder 1: a mixture of 75 parts of extra pure reagent potassium carbonate and 25 parts of extra pure reagent citric acid
Non-retarder 2: extra pure reagent potassium carbonate
Retarder 3: extra pure reagent citric acid
Retarder 4: extra pure reagent tartaric acid

Table 3

| Experiment No. | Kind and amount of retarder, etc. | Usable time (min) | Compression strength (N/mm$^2$) | | Wear resistance | Note |
|---|---|---|---|---|---|---|
| | | | 6 hours | 1 day | | |
| 1-1 | Retarder 1 1.5 | 76 | 27.6 | 44.6 | A | example |
| 3-1 | Non-retarder 2 1.5 | immediate setting | unmeasurable | unmeasurable | - | comparative example |
| 3-2 | Retarder 3 1.5 | 165 | 14.7 | 37.5 | B | example |
| 3-3 | Retarder 4 1.5 | 180 | 13.0 | 36.7 | B | example |
| 3-4 | 0 | immediate setting | unmeasurable | unmeasurable | - | comparative example |
| 3-5 | Retarder 1 1.0 | 40 | 23.5 | 39.7 | B | example |
| 3-6 | Retarder 1 2.0 | 175 | 26.1 | 45.8 | A | example |
| 3-7 | Retarder 1 4.0 | 288 | 10.8 | 36.4 | B | example |

It is understood from Table 3 that the effects of the present invention can be favorably exhibited in the case where an oxycarboxylic acid, or a mixture of a carbonate salt of an alkali metal other than lithium and an oxycarboxylic acid is used as the retarder.

(Experimental Example 4)

The same procedures as in Experimental Example 1 were performed except that in an ultrarapid hardening concrete using 380 kg/m$^3$ of a cement, 120 kg/m$^3$ of the rapid hardener A, and 3 parts of the hardening initiator a, the kind of the cement and the amount of the retarder 1 used were changed as shown in Table 4. The results are shown in Table 4.

Table 4

| Experiment No. | Cement | Retarder 1 | Usable time (min) | Compression strength (N/mm$^2$) | | Wear resistance | Note |
|---|---|---|---|---|---|---|---|
| | | | | 6 hours | 1 day | | |
| 1-1 | normal cement | 1.5 | 76 | 27.6 | 44.6 | A | example |
| 4-1 | early strength cement | 2 | 70 | 29.4 | 50.1 | A | example |
| 4-2 | moderate heat cement | 0.7 | 82 | 23.1 | 44.8 | A | example |
| 4-3 | low heat cement | 0.5 | 124 | 14.6 | 32.8 | B | example |

(continued)

| Experiment No. | Cement | Retarder 1 | Usable time (min) | Compression strength (N/mm$^2$) | | Wear resistance | Note |
|---|---|---|---|---|---|---|---|
| | | | | 6 hours | 1 day | | |
| 4-4 | China PII 42.5 | 1 | 84 | 21.0 | 40.1 | A | example |
| 4-5 | China PII 52.5 | 1.5 | 70 | 28.0 | 46.7 | A | example |
| 4-6 | China PO 42.5 | 0.5 | 116 | 15.3 | 38.5 | B | example |

It is understood from Table 4 that in any type of cement, a good 6-hour strength and a good 1-day strength are exhibited after ensuring a certain usable time, and in addition, excellent wear resistance is obtained, by appropriately controlling the amount of the retarder used.

(Experimental Example 5)

The same procedures as in Experimental Example 1 were performed except that in a rapid hardening concrete using 380 kg/m$^3$ of a cement, 120 kg/m$^3$ of the rapid hardener A, 1.5 parts of the retarder 1, and 3 parts of the hardening initiator a, the timings of the addition of the rapid hardener and the hardening initiator were changed as shown in Table 5. The results are shown in Table 5.

Table 5

| Experiment No. | Rapid hardener | Hardening initiator | Usable time (min) | | Compression strength (N/mm$^2$) | | Wear resistance | Capacity (% by volume) | Note |
|---|---|---|---|---|---|---|---|---|---|
| | | | Base concrete | After reaching construction site *3 | 6 hours | 1 day | | | |
| 1-1 | ready mixed concrete factory | construction site | ≥ 360 | 76 | 27.6 | 44.6 | A | ≥ 80 | example |
| 5-1 | ready mixed concrete factory | ready mixed concrete factory | 60 | *1 | *1 | *1 | *1 | *1 | comparative example |
| 5-2 | construction site | ready mixed concrete factory | 150 | 10 | *2 | *2 | *2 | 30 | comparative example |
| 5-3 | construction site | construction site | ≥ 360 | 53 | 24.0 | 41.3 | B | 30 | comparative example |

*1: A usable time of 120 minutes was not ensured, and the concrete was discarded before delivery to the construction site.
*2: The usable time after reaching the construction site was insufficient, and the concrete was not applied to the construction.
*3: The "usable time - after reaching construction site" in the table means the usable time from the addition of the hardening initiator and/or the rapid hardener.

It is understood from Table 5 that the effects of the present invention can be obtained only by adding the rapid hardener and the retarder in the ready mixed concrete factory and adding the hardening initiator in the construction site. In the case where both the rapid hardener and the hardening initiator are added in the ready mixed concrete factory, the usable time is extremely shortened to 60 minutes, and the concrete was necessarily discarded during the delivery thereof. In the case where the hardening initiator is added in the ready mixed concrete factory, and the rapid hardener is added in the construction site, the usable time after the addition of the rapid hardener is extremely shortened to 10 minutes, disabling the construction. In the case where the rapid hardener and the hardening initiator are added in the construction site, the usable time is shortened, the compression strength is lowered, the wear resistance tends to be deteriorated, and in addition, the concrete can be delivered only in an amount of approximately 30% of the drum capacity of the agitator as the kneading vessel.

(Experiment Example 6)

The same procedures as in Experimental Example 1 were performed except that in the experiment No. 1-3, the hardening initiator c was changed to hardening initiators c-1 and c-2 having a molar ratio of CaO and $Al_2O_3$ ($CaO/Al_2O_3$) shown in the following table. The results are shown in Table 6.

Table 6

| Experiment No. | Hardening initiator | $CaO/Al_2O_3$ molar ratio in hardening initiator | Usable time (min) | Compression strength ($N/mm^2$) | | | Wear resistance | Note |
|---|---|---|---|---|---|---|---|---|
| | | | | 6 hours | 1 day | 28 days | | |
| 6-1 | hardening initiator c-1 | 2.20 | 20 | 30.6 | 46.1 | 60.0 | A | example |
| 6-2 | hardening initiator c-2 | 1.75 | 40 | 29.7 | 45.9 | 55.7 | A | example |
| 6-3 | hardening initiator c-3 | 1.49 | 55 | 28.1 | 45.1 | 48.1 | A | example |
| 6-4 | hardening initiator c-4 | 1.37 | 65 | 27.4 | 44.7 | 46.2 | A | example |
| 1-3 | hardening initiator c | 1.27 | 77 | 24.7 | 43.4 | 43.5 | A | example |

(Experimental Example 7)

The same procedures as in Experimental Example 1 were performed except that anhydrous gypsum was added per 100 parts of the hardening initiator c as shown in the following table. The results are shown in Table 7.
The anhydrous gypsum used was type II anhydrous gypsum produced in Thailand.

Table 7

| Experiment No. | Hardening initiator | Amount of anhydrous gypsum | Usable time (min) | Compression strength ($N/mm^2$) | | Wear resistance | Note |
|---|---|---|---|---|---|---|---|
| | | | | 6 hours | 1 day | | |
| 7-1 | hardening initiator c | 120 parts | 100 | 29.3 | 46.1 | A | example |
| 7-2 | hardening initiator c | 100 parts | 90 | 27.1 | 44.6 | A | example |
| 1-3 | hardening initiator c | none | 77 | 24.7 | 43.4 | A | example |

(Experimental Example 8)

The same procedures as in Experimental Example 1 were performed except that 100 parts of water, and a dextrin and a cellulose derivative were added as shown in the following table to 100 parts of the hardening initiator c, so as to form a slurry, which was then added to and mixed with the base concrete. The results are shown in Table 8

The dextrin used was dextrin having a cold water soluble fraction of 50%, produced by Oji Cornstarch Co., Ltd., and the cellulose derivative used was Methyl Cellulose SM10000, produced by Shin-Etsu Chemical Co., Ltd.

Table 8

| Experiment No. | Hardening initiator | Dextrin | Cellulose derivative | Usable time (min) | Compression strength (N/mm$^2$) | | Wear resistance | Note |
|---|---|---|---|---|---|---|---|---|
| | | | | | 6 hours | 1 day | | |
| 8-1 | hardening initiator c | 0.5 part per 100 parts of hardening initiator | - | 80 | 23.1 | 41.8 | A | example |
| 8-2 | hardening initiator c | 0.5 part per 100 parts of hardening initiator | 30 parts per 100 parts of dextrin | 83 | 22.8 | 41.3 | A | example |
| 1-3 | hardening initiator c | none | | 77 | 24.7 | 43.3 | A | example |

(Experimental Example 9)

The same procedures as in Experimental Example 1 were performed except that 100 parts of the hardening initiator c was packaged with a water soluble PVA film to prepare a hardening initiator composition. The results are shown in Table 9.

The water soluble PVA film was formed by polymerizing vinyl acetate and prepared to be a 10% maleic acid modified product having an average saponification degree of 50%.

At the time of the addition of the hardening initiator packaged with the water soluble PVA film to the concrete, a dust concentration of less than 0.1 mg/m$^3$ was evaluated as A, a dust concentration of 0.1 mg/m$^3$ or more and less than 1.0 mg/m$^3$ was evaluated as B, and a dust concentration of 1.0 mg/m$^3$ or more was evaluated as C.

Table 9

| Experiment No. | Hardening initiator | PVA film | Usable time (min) | Compression strength (N/mm$^2$) | | Presence of dust | Note |
|---|---|---|---|---|---|---|---|
| | | Presence | | 6 hours | 1 day | | |
| 9-1 | c | present | 77 | 24.9 | 43.5 | A | example |
| 1-3 | c | none | 77 | 24.7 | 43.4 | B | example |

(Experimental Example 10)

The same procedures as in Experimental Example 1 were performed except that 3 parts of the hardening initiator c was used per 100 parts of the binder, and the kind and the amount of the rapid hardener were changed as shown in Table 10 (rapid hardeners A to D: the rapid hardener A was the same as used in Experimental Example 1, and the rapid hardeners B to D were the same as used in Experimental Example 2). The results are shown in Table 10.

<Materials Used>

Rapid hardener B: a mixture of the same amounts of CaO·Al$_2$O$_3$·SiO$_2$ based amorphous substance and anhydrous gypsum, the CaO·Al$_2$O$_3$·SiO$_2$ based amorphous substance having 47% of CaO, 47% of Al$_2$O$_3$, 3% of SiO$_2$, 3% of others, density: 2.85 g/cm$^3$, Blaine specific surface area: 5,000 cm$^2$/g, amorphous degree: 90%

18

Rapid hardener C: a mixture of the same amounts of an alumina cement No. 1 formed mainly of $CaO \cdot Al_2O_3$ and anhydrous gypsum, density: 3.00 $g/cm^3$, Blaine specific surface area: 5,000 $cm^2/g$

Rapid hardener D: an ultrarapid hardening cement containing a $3CaO \cdot 3Al_2O_3 \cdot CaSO_4$ based compound as a major component (40%), density: 2.80 $g/cm^3$, Blaine specific surface area: 5,000 $cm^2/g$

Table 10

| Experiment No. | Kind and amount of rapid hardener | Usable time (min) | Compression strength (N/mm²) | | Wear resistance | Note |
|---|---|---|---|---|---|---|
| | | | 6 hours | 1 day | | |
| 1-3 | A 120 | 77 | 24.7 | 43.4 | A | example |
| 10-1 | B 120 | 70 | 31.0 | 49.9 | A | example |
| 10-2 | C 120 | 65 | 23.2 | 40.0 | B | example |
| 10-3 | D 500 | 85 | 20.8 | 38.2 | B | example |
| 10-4 | 0 | ≥ 24 hours | unmeasurable not hardened | unmeasurable not hardened | C | comparative example |
| 10-5 | A 60 | 120 | 22.9 | 49.7 | B | example |
| 10-6 | A 90 | 100 | 26.4 | 50.3 | A | example |
| 10-7 | A 140 | 68 | 35.1 | 48.1 | A | example |
| 10-8 | A 160 | 60 | 38.0 | 46.2 | A | example |

It is understood from Table 10 that in the case where the rapid hardener is not added, the concrete is not hardened over 24 hours or more, and a 6-hour strength and a 1-day strength are not exhibited, but in the case where the rapid hardener is added, a good 6-hour strength and a good 1-day strength are exhibited after ensuring a certain usable time. In addition, excellent wear resistance is obtained. It is understood that the effect of the hardening initiator is exhibited even though the kind of the rapid hardener is changed.

(Experimental Example 11)

The same procedures as in Experimental Example 1 were performed except that the hardening initiator c was used, and the kind and the amount of the retarder were changed as shown in Table 11. The results are shown in Table 11.

<Materials Used>

Retarder 1: a mixture of 75 parts of extra pure reagent potassium carbonate and 25 parts of extra pure reagent citric acid
Non-retarder 2: extra pure reagent potassium carbonate
Retarder 3: extra pure reagent citric acid
Retarder 4: extra pure reagent tartaric acid

Table 11

| Experiment No. | Kind and amount of retarder, etc. | Usable time (min) | Compression strength (N/mm²) | | Wear resistance | Note |
|---|---|---|---|---|---|---|
| | | | 6 hours | 1 day | | |
| 1-3 | Retarder 1 1.5 | 77 | 24.7 | 43.4 | A | example |
| 11-1 | Non-retarder 2 1.5 | immediate setting | unmeasurable | unmeasurable | - | comparative example |
| 11-2 | Retarder 3 1.5 | 160 | 15.1 | 38.4 | B | example |
| 11-3 | Retarder 4 1.5 | 170 | 12.5 | 37.2 | B | example |

(continued)

| Experiment No. | Kind and amount of retarder, etc. | Usable time (min) | Compression strength (N/mm$^2$) | | Wear resistance | Note |
|---|---|---|---|---|---|---|
| | | | 6 hours | 1 day | | |
| 11-4 | 0 | immediate setting | unmeasurable | unmeasurable | - | comparative example |
| 11-5 | Retarder 1 1.0 | 35 | 26.5 | 40.1 | B | example |
| 11-6 | Retarder 1 2.0 | 170 | 27.1 | 46.5 | A | example |
| 11-7 | Retarder 1 4.0 | 280 | 11.7 | 37.3 | B | example |

It is understood from Table 11 that the effects of the present invention can be favorably exhibited in the case where an oxycarboxylic acid, or a mixture of a carbonate salt of an alkali metal other than lithium and an oxycarboxylic acid is used as the retarder.

(Experimental Example 12)

The same procedures as in Experimental Example 1 were performed except that in an ultrarapid hardening concrete using 380 kg/m$^3$ of a cement, 120 kg/m$^3$ of the rapid hardener A, and 3 parts of the hardening initiator c, the kind of the cement and the amount of the retarder 1 used were changed as shown in Table 12. The results are shown in Table 12.

Table 12

| Experiment No. | Cement | Retarder 1 | Usable time (min) | Compression strength (N/mm$^2$) | | Wear resistance | Note |
|---|---|---|---|---|---|---|---|
| | | | | 6 hours | 1 day | | |
| 1-3 | normal cement | 1.5 | 77 | 24.7 | 43.4 | A | example |
| 12-1 | early strength cement | 2 | 70 | 34.1 | 54.3 | A | example |
| 12-2 | moderate heat cement | 0.7 | 82 | 28.3 | 49.6 | A | example |
| 12-3 | low heat cement | 0.5 | 124 | 20.1 | 37.4 | B | example |
| 12-4 | China PII 42.5 | 1 | 84 | 26.3 | 45.2 | A | example |
| 12-5 | China PII 52.5 | 1.5 | 70 | 32.0 | 51.1 | A | example |
| 12-6 | China PO 42.5 | 0.5 | 116 | 20.1 | 44.2 | B | example |

It is understood from Table 12 that in any type of cement, a good 6-hour strength and a good 1-day strength are exhibited after ensuring a certain usable time, and in addition, excellent wear resistance is obtained, by appropriately controlling the amount of the retarder used.

(Experimental Example 13)

The same procedures as in Experimental Example 1 were performed except that in a rapid hardening concrete using 380 kg/m$^3$ of a cement, 120 kg/m$^3$ of the rapid hardener A, 1.5 parts of the retarder 1, and 3 parts of the hardening initiator c, the timings of the addition of the rapid hardener and the hardening initiator were changed as shown in Table 13. The results are shown in Table 13.

Table 13

| Experiment No. | Rapid hardener | Hardening initiator | Usable time (min) | | Compression strength (N/mm$^2$) | | Wear resistance | Capacity (% by volume) | Note |
|---|---|---|---|---|---|---|---|---|---|
| | | | Base concrete | After reaching construction site *3 | 6 hours | 1 day | | | |
| 1-3 | ready mixed concrete factory | construction site | ≥ 360 | 30 | 24.7 | 43.4 | A | ≥ 60 | example |
| 13-1 | ready mixed concrete factory | ready mixed concrete factory | 60 | *1 | *1 | *1 | *1 | *1 | comparative example |
| 13-2 | construction site | ready mixed concrete factory | 150 | 10 | *2 | *2 | *2 | 30 | comparative example |
| 13-3 | construction site | construction site | ≥ 360 | 53 | 24.0 | 41.3 | B | 30 | comparative example |

1*: A usable time of 120 minutes was not ensured, and the concrete was discarded before delivery to the construction site.

*2: The usable time after reaching the construction site was insufficient, and the concrete was not applied to the construction.

*3: The "usable time - after reaching construction site" in the table means the usable time from the addition of the hardening initiator and/or the rapid hardener.

It is understood from Table 13 that the effects of the present invention can be obtained only by adding the rapid hardener and the retarder in the ready mixed concrete factory and adding the hardening initiator in the construction site. In the case where both the rapid hardener and the hardening initiator are added in the ready mixed concrete factory, the usable time is extremely shortened to 60 minutes, and the concrete was necessarily discarded during the delivery thereof. In the case where the hardening initiator is added in the ready mixed concrete factory, and the rapid hardener is added in the construction site, the usable time after the addition of the rapid hardener is extremely shortened to 10 minutes, disabling the construction. In the case where the rapid hardener and the hardening initiator are added in the construction site, the usable time is shortened, the compression strength is lowered, the wear resistance tends to be deteriorated, and in addition, the concrete can be delivered only in an amount of approximately 30% of the drum capacity of the agitator as the kneading and delivery vessel.

Industrial Applicability

The ready mixed shipping rapid hardening concrete composition of the present invention is excellent in strength exhibition in the early stage while ensuring a sufficient usable time, and exhibits excellent wear resistance after hardening, and therefore is favorably used particularly in the civil engineering and construction fields.

**Claims**

1. A hardening initiator for a ready mixed shipping rapid hardening concrete, comprising at least one selected from the group consisting of calcium hydroxide, calcium carbonate, a calcium aluminate based compound, a calcium silicate based compound, a colloidal silica, a portland cement, a calcium sulfo aluminate cement, and a blast furnace slag.

2. The hardening initiator for a ready mixed shipping rapid hardening concrete according to claim 1, further comprising gypsum.

3. The hardening initiator for a ready mixed shipping rapid hardening concrete according to claim 2, wherein the hardening initiator comprises the calcium aluminate based compound and the gypsum.

4. The hardening initiator for a ready mixed shipping rapid hardening concrete according to any one of claims 1 to 3, wherein
the hardening initiator comprises the calcium hydroxide and the calcium aluminate based compound, and
has a mass ratio of the calcium hydroxide and the calcium aluminate based compound (calcium hydroxide/calcium aluminate based compound) of 1/99 to 99/1.

5. The hardening initiator for a ready mixed shipping rapid hardening concrete according to any one of claims 1 to 4, wherein the calcium aluminate based compound has a molar ratio of CaO and $Al_2O_3$ ($CaO/Al_2O_3$) of 0.5 to 2.4.

6. The hardening initiator for a ready mixed shipping rapid hardening concrete according to any one of claims 1 to 5, further comprising at least one selected from the group consisting of a dextrin and a cellulose derivative.

7. The hardening initiator for a ready mixed shipping rapid hardening concrete according to any one of claims 1 to 6, which is packaged in a water soluble film.

8. A two-component type ready mixed shipping rapid hardening concrete material comprising a material A containing a cement, a rapid hardener, and a retarder, and a material B containing the hardening initiator for a ready mixed shipping rapid hardening concrete according to any one of claims 1 to 7.

9. A ready mixed shipping rapid hardening concrete composition comprising a material A containing a cement, a rapid hardener, and a retarder and a material B containing the hardening initiator for a ready mixed shipping rapid hardening concrete according to any one of claims 1 to 7, which is added thereto and mixed therein.

10. The ready mixed shipping rapid hardening concrete composition according to claim 9, wherein the rapid hardener contains a calcium aluminate based compound and a gypsum compound as major components.

11. The ready mixed shipping rapid hardening concrete composition according to claim 9 or 10, wherein

the rapid hardener contains a CaO·Al$_2$O$_3$·SiO$_2$ based compound and a gypsum compound, and
the CaO·Al$_2$O$_3$·SiO$_2$ based compound has an amorphous degree of 70% or more and contains SiO$_2$ in a range of 1 to 18% by mass.

12. The ready mixed shipping rapid hardening concrete composition according to any one of claims 9 to 11, wherein the retarder contains an oxycarboxylic acid, or a carbonate salt of an alkali metal other than lithium and an oxycarboxylic acid.

13. The ready mixed shipping rapid hardening concrete composition according to any one of claim 9 to 12, wherein the content of the hardening initiator for a ready mixed shipping rapid hardening concrete is from 0.5 to 7 parts by mass per 100 parts by mass in total of the cement and the rapid hardener.

14. A method for preparing a ready mixed shipping rapid hardening concrete, comprising in this order: kneading at least a cement, a rapid hardener, and a retarder with kneading water in a kneading vessel; and further mixing the hardening initiator for a ready mixed shipping rapid hardening concrete according to any one of claims 1 to 7 therein.

15. The method for preparing a ready mixed shipping rapid hardening concrete according to claim 14, wherein in the kneading step, a base concrete containing at least the cement, the rapid hardener, the retarder, an aggregate, and the kneading water has a volume of 40% or more of an inner capacity of the kneading vessel.

16. The method for preparing a ready mixed shipping rapid hardening concrete according to claim 14 or 15, wherein a kind and a mixed amount of the hardening initiator for a ready mixed shipping rapid hardening concrete are determined to ensure a usable time of 15 minutes or more after mixing the hardening initiator for a ready mixed shipping rapid hardening concrete.

17. The method for preparing a ready mixed shipping rapid hardening concrete according to any one of claims 14 to 16, wherein the retarder is used in an amount of 0.3 to 5 parts by mass per 100 parts by mass in total of the cement and the rapid hardener.

<div style="text-align:center">**INTERNATIONAL SEARCH REPORT**</div>

| International application No. |
| --- |
| PCT/JP2017/041867 |

**A.  CLASSIFICATION OF SUBJECT MATTER**
Int.Cl.  C04B22/06(2006.01)i, B28C7/04(2006.01)i, C04B14/04(2006.01)i,
     C04B14/28(2006.01)i, C04B18/14(2006.01)i, C04B22/08(2006.01)i,
     C04B22/10(2006.01)i, C04B22/14(2006.01)i, C04B24/06(2006.01)i,
     C04B28/02(2006.01)i, C04B103/10(2006.01)n

According to International Patent Classification (IPC) or to both national classification and IPC

**B.  FIELDS SEARCHED**

Minimum documentation searched (classification system followed by classification symbols)
Int.Cl.  C04B22/06, B28C7/04, C04B14/04, C04B14/28, C04B18/14, C04B22/08, C04B22/10,
     C04B22/14, C04B24/06, C04B28/02, C04B103/10

Documentation searched other than minimum documentation to the extent that such documents are included in the fields searched
Published examined utility model applications of Japan          1922–1996
Published unexamined utility model applications of Japan        1971–2018
Registered utility model specifications of Japan                1996–2018
Published registered utility model applications of Japan        1994–2018

Electronic data base consulted during the international search (name of data base and, where practicable, search terms used)
 JSTPlus/JSTChina/JST7580 (JDreamIII)

**C.  DOCUMENTS CONSIDERED TO BE RELEVANT**

| Category* | Citation of document, with indication, where appropriate, of the relevant passages | Relevant to claim No. |
| --- | --- | --- |
| X<br>Y | 古井博ほか, 戻りコンクリートの再使用に関する一研究, コンクリ ー ト工学年次論文報告集, 1997, vol. 19, no. 1, pp. 241–246, (FURUI, Hiroshi et al., "An Experimental Study on Re-Use of Returned Concrete", Proceedings of the Japan Concrete Institute) | 1, 8–9, 12, 14<br>2–7, 10–11, 13, 15–17 |
| Y | JP 2007-137745 A (TAIHEIYO MATERIALS CORPORATION) 07 June 2007, claims, paragraphs [0018], [0019] (Family: none) | 2–7, 10–11, 13, 15–17 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 January 2018 (10.01.2018) | 23 January 2018 (23.01.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2017/041867

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 7-148728 A (MITSUI SEKIKA SANSHI KK.) 13 June 1995, claims (Family: none) | 7, 10-11, 13, 15-17 |
| Y | WO 2013/077216 A1 (DENKI KAGAKU KOGYO KABUSHIKI KAISHA) 30 May 2013, claims & EP 2784035 A1, claims & TW 201335104 A | 10-11, 13, 15-17 |
| A | JP 63-060184 A (SANDOZ AG) 16 March 1988, entire text & US 4964917 A & KR 10-1993-0006338 B & CN 87105879 A | 1-17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 903019 A
- JP 48001024 A
- JP 4097932 A
- JP 2000264712 A
- JP 2000327394 A
- JP 2001213655 A
- JP 2001253753 A
- JP 2002037654 A
- JP 11024074 A
- JP 2002321958 A
- JP 2002321959 A
- JP 2007045654 A
- JP 2012139897 A